# EUROPÄISCHE PATENTSCHRIFT

(11) **EP 3 405 036 B1**
(45) Veröffentlichungstag und Bekanntmachung des Hinweises auf die Patenterteilung: **13.05.2020**
(21) Anmeldenummer: 17702028.6
(22) Anmeldetag: 20.01.2017
(51) Int. Cl.: A21C 3/08

(54) **VERFAHREN ZUR MASCHINELLEN BREZELHERSTELLUNG**
METHOD FOR MECHANICAL PRETZEL PRODUCTION
PROCÉDÉ DE PRODUCTION MÉCANISÉE DE BRETZELS

(30) Priorität: 22.01.2016 DE 102016101139
(43) Veröffentlichungstag der Anmeldung: 28.11.2018
(73) Patentinhaber: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB
(86) Internationale Anmeldenummer: PCT/EP2017/051187
(87) Internationale Veröffentlichungsnummer: WO 2017/125549

(56) Entgegenhaltungen:
- DE-A1- 1 782 289
- DE-A1-102013 103 368

## Beschreibung

Die Erfindung betrifft ein Verfahren zur maschinellen Brezelherstellung mit den Merkmalen des Oberbegriffes des Verfahrensanspruches 1 sowie eine Vorrichtung zur Durchführung des Verfahrens.

Bei einem bekannten Verfahren (DE 100 29 171) sind folgende Verfahrensschritte vorgesehen:
Zunächst wird eine Brezelform- und Schlingvorrichtung vorgesehen, der über eine Zuführeinrichtung in Form eines Förderbands Teigstrangabschnitte zugeführt werden. Die Teigstrangabschnitte werden vorher vorgeformt und die Enden symmetrisch ausgerichtet und auf einer Förderbandeinrichtung der Form und Schlingvorrichtung zugefahren.

Sodann wird der Mittelbereich eines zugeführten Teigstrangabschnitts mit einer Formeinheit der Vorrichtung erfasst, wobei der Mittelbereich des Teigstrangs um eine Mehrzahl von höhenverlagerbaren bolzenartigen Elementen der Formeinheit U-förmig herumgelegt wird. Beim Stand der Technik werden die höhenverlagerbaren bolzenartigen Formelemente der Formeinheit durch Zwischenräume zwischen parallel laufenden Förderbandabschnitten hochgefahren.

Sodann werden die Teigstrangenden, die im Wesentlichen in eine Richtung weisen, durch Greifer einer Greifeinheit erfasst und der Teigstrang durch Ausübung eines Zuges auf die Teigstrangenden bei gleichzeitiger Fixierung des Mittelbereiches des jeweiligen Teigstrangs durch die Formeinheit gedehnt.

Nach der Dehnung wird eine gegenseitige Rotation der Greifelemente initiiert, wodurch der Brezelknoten geformt wird.

Das bekannte Verfahren ist insofern nicht optimiert, als der Dehnungsvorgang und der Schlingvorgang zur Formung des Knotens zeitlich nacheinander ablaufen, was das Verfahren verzögert.

Darüber hinaus wird beim Stand der Technik der Schlingvorgang erst gestartet, wenn die Teigstrangenden bereits wieder in Richtung des Mittelpunkts zurückgeführt werden. Dabei werden die Teigstrangenden relativ stark gegenüber dem Mittelbereich des Teigstrangs angehoben, wodurch die Gefahr besteht, dass der Mittelbereich des Teigstrangs über die oberen Enden der bolzenartigen Formelemente der Formeinheit gleitet. Beim Stand der Technik müssen deswegen den Teigstrang niederhaltende Führungen vorgesehen werden, die zangenartig den Teigstrang zwischen dem Mittelbereich des Strangs und dem den Knoten bildenden Bereich umgreifen und damit vermeiden, dass der Mittelbereich des Teigstrangs beim Schlingvorgang von den Formelementen nach oben abgezogen wird.

DE 17 82 289 A1 offenbart ein Verfahren zur maschinellen Brezelherstellung gemäß dem Oberbegriff des Anspruchs 1 und eine Vorrichtung zum Schlingen von Brezeln gemäß dem Oberbegriff des Anspruchs 14, welche bewegliche Niederhalter mit entsprechend der Brezelform und dem jeweiligen Durchmesser eines Teigstrangs angeordneten Krallen umfasst.

Der Erfindung liegt die Aufgabe zugrunde, ein Verfahren mit den Merkmalen des Oberbegriffes des Anspruchs 1 derart auszubilden, dass das Verfahren mit technisch reduziertem maschinellen Aufwand sowie höherer Taktzahl durchgeführt werden kann. Diese Aufgabe wird dadurch gelöst, dass die Formung des Brezelknoten durch gegenseitige Rotation der Greifelemente bereits während der Dehnung oder Dehnphase des Teigstrangs eingeleitet wird.

Die Formung des Brezelknotens während des Dehnungsvorganges des Teigstrangs wirkt sich in mehrerlei Hinsicht positiv auf den Herstellungsprozess aus. Zum ersten führt die Formung des Brezelknotens während des Dehnungsprozesses dazu, dass sich der Mittelbereich des Teigstrangs besonders innig um die bolzenartigen Formelemente herumlegt und deswegen ein Abrutschen nach oben in der Regel verhindert werden kann. Eine erste Rotation, beispielsweise um 180°, der Greifer führt dazu, dass das sich bildende Auge des Brezelstrangs i. W. geschlossen wird und die Oberfläche des Teigstrangs in besonders innigem Kontakt mit den bolzenartigen Vorsprüngen ist. Die Dehnung des Teigstrangs durch Zug an den Teigstrangenden bei gleichzeitiger Teilformung des Knotens bis zu einem relativen Umkehrpunkt des Greiferpaars gegenüber dem Mittelbereich des Teigstrangs erfolgt derart, dass der Überkreuzungspunkt der Teigstränge nicht oder nur unwesentlich höher angehoben wird als die Abstehhöhe der Formelemente über einer Teigstrangauflage, beispielsweise einem Förderband. Beim nachfolgenden weiteren Schlingvorgang zur Herstellung des Brezelknotens durch die Greifeinrichtung wird dafür gesorgt, dass durch Reibschluss oder teilweisen Formschluss zwischen der Oberfläche des Teigstrangs und dem Formelement der Teigstrang nicht nach oben rutscht. Dadurch kann auf eine greifer- oder zangenartige Niederhaltevorrichtungen verzichtet werden, was den Vorgang weiter beschleunigt und die Herstellungsapparatur vereinfacht.

Sofern bei der Einleitung der Formung des Brezelknotens die bereits unter Zug befindlichen Teigstrangenden derart gekreuzt werden, dass der Überkreuzungspunkt der Teigstrangenden nicht oder in einem Bereich zwischen 0,5 und 10 mm, höher liegt als die Abstehhöhe der Formelemente über der Teigstrangauflage, ist zweckmäßig vorgesehen, dass der Mittelbereich des Teigstrangabschnitts die Abstehhöhe der Formelemente über der Teigstrangauflage nicht überragt. Derart ist eine Sicherung des Teigstrangs bzw. des Teigstrangmittelbereichs möglich, welche die Gefahr eines unkontrollierten Bewegens des Teigstrangs während der Formung des Brezelknotens verhindert.

Die Teigstrangenden werden sowohl während der Teigstrangdehnungsphase, d. h. einer relativen Wegbewegung der Greifer vom Teigstrangmittelpunkt bis zu einem Umkehrpunkt, und auch nachfolgend während einer Teigstrangentlastungsphase gegenüber der Teigstrangauflage angehoben. Dieses Anheben muss nicht notwendigerweise kontinuierlich durchgeführt werden, es kann auch stufenweise erfolgen, jedenfalls ist sowohl der Dehnungs- als auch der Entlastungsprozess des Teigstrangs mit einem Anheben der Teigstrangenden durch die Greifer verbunden, im Gegensatz zum Stand der Technik, wo die Teigstrangenden vorrangig nur während der Dehnungsphase angehoben werden, ohne dass ein Schlingungsprozess oder eine Rotation der Greifer eingeleitet wird.

Was die Bewegung der Greifer anbelangt, so kann es vorteilhaft sein, wenn die gemeinsame Rotationsachse der beiden die Teigstrangenden haltenden Greifer beim Rotationsvorgang eine Taumelbewegung ausführt, d. h. das Über- oder Untergreifen der Teigstränge der Rotation der Greifer nur auf einen kurzen Rotationsabschnitt beschränkt ist, sodass der Rotationsvorgang relativ niedrig und flach über der Fördereinrichtung stattfinden kann. Naturgemäß müssen die sich kreuzenden oder bereits gekreuzten Teigstrangenden über den Mittelbereich der teilgeformten Breze zurückgeführt werden, um mit dem Mittelbereich vereinigt zu werden. Dazu müssen sie über die oberen Enden der bolzenartigen Formelemente der Formeinheit gehoben werden. Dazu ist es vorteilhaft, wenn die Formelemente einzeln oder in Gruppen zumindest teilweise abgesenkt und/oder unter die Ebene der Teigstrangauflage zugezogen werden. Das Zurückziehen der bolzenartigen Formelemente wird prozessgesteuert während der Überführung der Teigstrangenden in den Mittelbereich vollzogen.

Da durch die erfindungsgemäß relativ früh einsetzende Rotation der Greifer der Brezelknoten während einer relativ frühen linearen Bewegungsphase entweder während der Teigstrangdehnungsphase oder Teigstrangentlastungsphase relativ weitgehend fertig geschlungen werden kann, wird der Brezelknoten sich sehr innig verbinden, was durch die Wechselzugwirkung der rotierenden Greifer noch unterstützt wird. Der eine Greifer dehnt zunächst den Teigstrang an einem Ende und der andere Greifer entlastet zumindest geringfügig das andere Ende, sodann wird das vorher entlastete Ende noch einmal gedehnt und das erste Ende etwas entlastet, was zu einer besonders innigen Vereinigung der beiden den Brezelknoten bildenden Teigstrangabschnitte führt.

Um insbesondere bei sehr hohen Taktzahlen der Vorrichtung mit Sicherheit ein Abrutschen des Teigstrangs über die oberen Enden der Formelemente zu vermeiden, kann es vorteilhaft sein, wenn die Formelemente zumindest teilweise gekrümmt sind. Dadurch wird an den Formelementen ein Formschluss erzeugt, der die Teigstränge im Bereich der Formeinheit "am Boden" hält. Der Formschluss kann dadurch aufgehoben werden, dass die bolzenartigen Formelemente entweder auf einer gekrümmten Bahn nach unten gezogen werden und dadurch den Teigstrang freigeben oder um eine Hochachse um ca. 180° rotieren, sodass ebenfalls der hakenartige Griff der bolzenartigen Elemente um den Teigstrang gelöst wird.

Zur Freigabe des Teigstrangs aus dem Hinterschnitt werden mit einem Vorsprung versehene Formelemente typischerweise wenigstens teilweise, d. h. um einen bestimmten, zur Freigabe des Teigstrangs aus dem Hinterschnitt ausreichenden, Winkelbereich, um ihre Hochachse rotiert. Gekrümmte, d. h. insbesondere sichelförmig gekrümmte, Formelemente werden zur Freigabe des Teigstrangs aus dem Hinterschnitt typischerweise entlang einer durch die Krümmung der Formelemente definierten Bewegungsbahn in eine den Teigstrang aus dem Hinterschnitt freigebende Position bewegt bzw. zurückgezogen.

Die mit Greifern versehene Greifeinheit wird in der Teigstrangdehnungsphase typischerweise in wenigstens zwei unterschiedlichen Bewegungsfreiheitsgraden relativ zu den bolzenartigen Formelementen bewegt, wobei ein erster Bewegungsfreiheitsgrad eine lineare Bewegung der Greifeinheit entlang einer linearen Bewegungsachse relativ zu den bolzenartigen Formelementen ist und wenigstens ein weiterer Bewegungsfreiheitsgrad eine rotatorische Bewegung (Drehbewegung) der Greifeinheit um eine Rotationsachse relativ zu den bolzenartigen Formelementen ist. Ein weiterer Bewegungsfreiheitsgrad kann die Anhebebewegung der Greifeinheit sein. Bei der Bewegung der Greifer handelt es sich typischerweise um eine aus Bewegungen in mehreren unterschiedlichen Bewegungsfreiheitsgraden kombinierte bzw. überlagerte Bewegung der Greifeinheit (relativ zu den Formelementen). Ein Anheben der Teigstrangenden kann entweder auf einer geradlinig verlaufenden schrägen Bahn oder auf einer nach oben oder unten gekrümmten Bahn oder stufenweise erfolgen. Das Anheben erfolgt zweckmäßig mit einem vergleichsweise flachen Winkel relativ zu der Teigstrangauflage und insbesondere geringfügig oberhalb der Abstehhöhe der Formelemente über der Teigstrangauflage. In einer auf die Teigstrangdehnungsphase folgenden Dehnungsentlastungsphase kann ein weiteres Anheben der Greifer erfolgen.

Die bolzenartigen Formelemente können in wenigstens zwei Richtungen höhenverlagerbar sein. Die Höhenverlagerung der Formelemente kann in Abhängigkeit der geometrischen Abmessungen, insbesondere des Durchmessers, insbesondere des Mittelbereichs, eines Teigstrangabschnitts variabel eingestellt werden. Die Einstellung kann derart erfolgen, dass das freie Ende eines jeweiligen Formelements wenigstens den Scheitelpunkt des, insbesondere querschnittlich betrachtet runden bzw. rundlichen, Teigstrangabschnitts, gegebenenfalls den gesamte Teigstrangabschnitt überragt. Derart ist, insbesondere auch für unterschiedliche Abmessungen aufweisende Teigstränge, eine sichere Anlage eines jeweiligen Teigstrangabschnitts an den Formelementen gewährleistet. Die Erfassung der geometrischen Abmessungen, insbesondere des Durchmessers, insbesondere des Mittelbereichs, eines Teigstrangabschnitts kann über eine geeignete Erfassungseinrichtung, d. h. z. B. eine optische Erfassungseinrichtung, insbesondere eine Kamera, erfolgen.

Die Erfindung ist anhand vorteilhafter Ausführungsbeispiele in den Zeichnungsfiguren näher erläutert, wobei sowohl Verfahrensmerkmale in den Zeichnungen als auch Vorrichtungsmerkmale der Vorrichtung zur Durchführung des Verfahrens erläutert werden.

Die Zeichnungsfiguren zeigen in:
- Fig. 1: eine schematische Darstellung der Verfahrensschritte, die beim Stand der Technik ablaufen;
- Fig. 2: eine Darstellung der Verfahrensschritte gem. der Erfindung, ähnlich Fig. 1, wobei das Anheben der Teigstrangenden und die dabei folgende Rotation der Greifer zur Einleitung des Schlingvorgangs des Brezelknotens angedeutet ist;
- Fig. 3: eine schematische Detaildarstellung der bolzenartigen Formelemente mit den teigstrangübergreifenden Vorsprüngen;
- Fig. 4: eine schematische Darstellung insgesamt gekrümmter Formelemente;
- Fig. 5: eine schematische Draufsicht auf den Kranz der Formelemente nach einer ersten Rotation der Greifer.

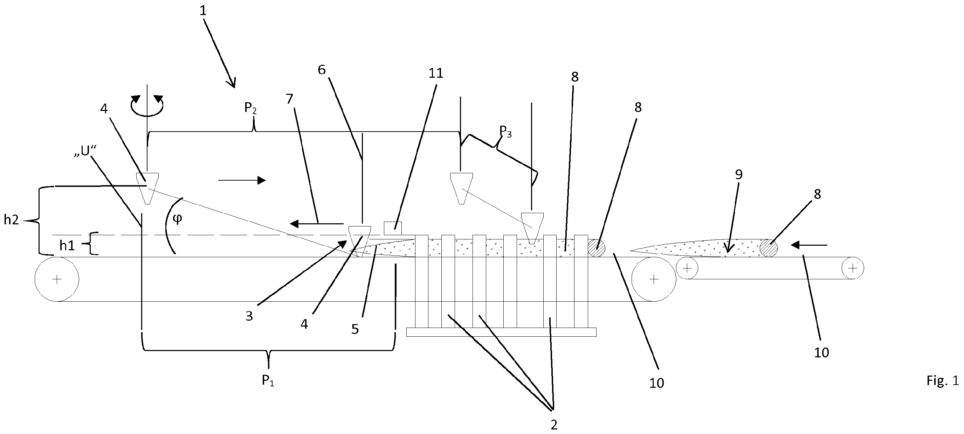

Zunächst wird gemäß Fig. 1 das Verfahren nach dem Stand der Technik beschrieben.

Das Verfahren setzt eine Brezelform und Schlingvorrichtung 1 voraus, die unter anderem eine Anordnung von bolzenartigen Formelementen 2 und eine Greifeinheit 3 umfasst, wobei die Greifeinheit 3 zwei Greifer 4 zum Erfassen der Teigstrangenden 5 aufweist. Die beiden Greifer 4 können um eine gemeinsame Drehachse 6 verdreht und insgesamt in Förderrichtung 7 relativ zu den bolzenartigen Formelementen 2 verfahren werden, um auf die Teigstrangenden 5 einen Zug auszuüben, der zu einer Dehnung des Teigstrangs 8 führt. Rechts von der durch die bolzenartigen Formelemente 2 gebildeten Formeinheit ist in Figur 1 noch ein Teigstrang 8 gezeigt, wobei der Teigstrang 8 auf einer Zuführeinrichtung 9 in Form eines Förderbands 10 der Vorrichtung 1 zugeführt wird.

Beim Stand der Technik werden während einer Dehnungsphase P1, ohne einen Schlingvorgang, die Teigstränge bis zu einem Umkehrpunkt U gedehnt, und gleichzeitig auf eine Höhe h2 angehoben. Dann wird eine Dehnungsentlastungsphase P2 eingeleitet, wobei der Abstand zwischen den Greifern 4, die vorher bis zum Umkehrpunkt U verfahren wurden, zu den Formelementen 2 verringert wird. Es kommt dabei auf den relativen Abstand an, wobei sowohl die Greifeinheit 3 als auch die Formeinheit gebildet durch die bolzenartigen Formelemente 2 verfahren werden können.

Während der Dehnungsphase P1 erfolgt beim Stand der Technik damit lediglich ein Anheben der Teigstrangenden 5, bis beim Umkehrpunkt die Höhe h2 erreicht ist. Dann wird während einer Entlastungs- und Schlingphase die Greifeinheit 3 in Richtung der Formeinheit zurückgefahren und der Schlingvorgang durchgeführt, dann werden während der Phase P3 die Teigstrangenden 5 auf den Strangmittelbereich abgesenkt und dort eingedrückt.

Während der Schlingphase und Dehnungs-Entlastungsphase P2 wird die Höhe h2 im Wesentlichen beibehalten. Die Höhe h2 ist so bemessen, dass das Greiferpaar die Teigstrangenden 5 ohne Probleme über die oberen Enden der hochgefahrenen bolzenartigen Formelemente 2 heben kann, ohne dass der durchhängende Teigstrang 8 an den Formelementen 2 hängen bleibt.

Da außerdem das Anheben der Teigstrangenden 5 während der Dehnungsphase P1 in einem relativ steilen Winkel erfolgt, ist zu befürchten, dass der Teigstrang 8 nach oben von den bolzenartigen Formelementen 2 rutscht, was zu einem Abbruch des Schlingverfahrens führen würde. Aus diesem Grunde wird zu Beginn der Teigstrangdehnungsphase P1 eine Niederhaltevorrichtung 11 nach Art einer Greifeinheit um die beiden sich zusammenlegenden Teigstränge der Teigstrangenden 5 herumgefahren, die ggf. mit der Greifeinheit 3 mitverfahren wird. Diese hält den sich dehnenden Teigstrang 8 im Bereich der Form- und Schlingvorrichtung 1 so weit unten über der Förderbandeinrichtung, dass ein Abrutschen des Teigstrangs 8 über die Oberkante der bolzenartigen Formelemente 2 mit Sicherheit vermieden wird. Durch diese Niederhalteeinheit 11 wird die Taktzahl der Vorrichtung reduziert und der maschinelle Aufbau verkompliziert.

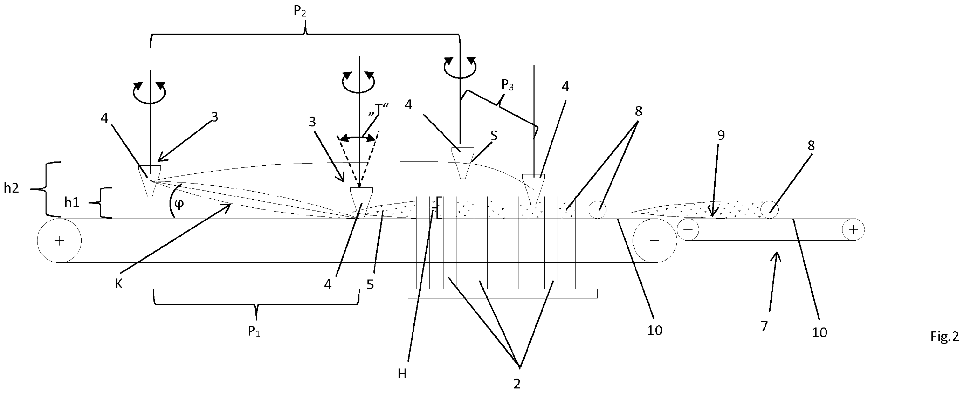

Nachfolgend wird auf Figur 2 Bezug genommen.

In Zeichnungsfigur 2 tragen identische Elemente oder Phasen identische Bezugszeichen wie in Figur 1.

Zunächst ist zu sehen, dass während der Teigstrangdehnungsphase P1 die Teigstrangenden 5 durch die Greifer 4 der Greifeinheit 3 in einem deutlich kleineren Winkel ϕ von der Förderbandeinrichtung abgehoben werden als beim Stand der Technik. Beim Umkehrpunkt U wird lediglich eine Höhe h1 erreicht, die deutlich unter der endgültigen Anhebehöhe h2 liegt, die ausreichend ist, um die sich gekreuzten Teigstrangenden 5 über die oberen Enden der höhenverlagerbaren bolzenartigen Formelemente 2 der Formeinheit zu heben. Das Anheben der Teigstrangenden 5 während der ersten Phase P1 kann entweder auf einer geraden Bahn oder auf einer nach oben oder unten gekrümmten Bahn oder stufenweise erfolgen, jedenfalls insgesamt mit einem flacheren Winkel und lediglich bis zu einer geringeren Höhe h1, weil nach dem Umkehrpunkt U, d. h. in der Dehnungsentlastungsphase P2 ein weiteres Anheben der Greifer 4 erfolgt. Insgesamt ist das Anheben damit i. W. auf zwei Phasen verteilt, was den gesamten Vorgang beruhigt. Außerdem ist zu sehen, dass die Greifeinheit 3 mit den Greifern 4 bereits in der Teigdehnungsphase P1 eine Rotation startet, um die Teigstrangenden 5 zumindest teilweise zu überkreuzen. Auch während der Dehnungsentlastungsphase P2 bei weiterem Anheben der Teigstrangenden 5 wird die Greifeinheit 3 weiter rotieren, um eine endgültige Fertigstellung des Brezelknotens durchzuführen.

Es liegt im Rahmen der Erfindung, dass auch während einer Absenkphase P3 die Greifeinheit 3 noch rotiert, es kann aber auch so sein, dass der Brezelknoten bereits zum Ende der Dehnungsentlastungsphase P2, d. h. am Scheitelpunkt S der oberen Bewegungskurve bereits fertig geschlungen ist.

Bei der Einleitung der Formung des Brezelknotens werden die bereits unter Zug befindlichen Teigstrangenden 5 derart gekreuzt, dass der Überkreuzungspunkt K nicht oder in einem Bereich zwischen 0,5 und 10 mm höher liegt als die Abstehhöhe H der Formelemente 2 über der Teigstrangauflage in Form des Förderbands 10.

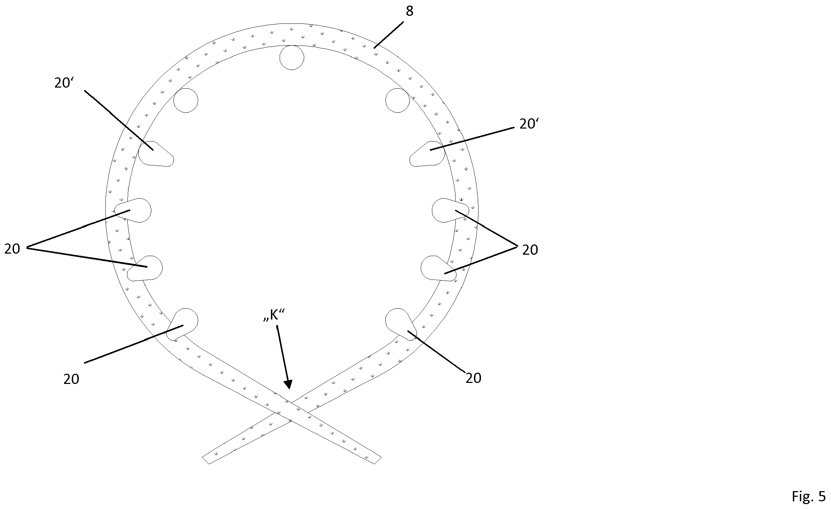

Der Teigstrang 8 wird beim nachfolgenden weiteren Schlingvorgang zur Herstellung des Brezelknotens durch die Greifeinrichtung 3 im Bereich der Abstehhöhe H der bolzenartigen Formelemente 2 durch Reibschluss oder teilweisen Formschluss zwischen der Oberfläche des Teigstrangs 8 und den Formelementen 2 gehalten. Die Mehrzahl von bolzenartigen Formelementen 2 wird von dem Teigstrang 8 in einem Umschlingungsbereich von wenigstens 220° umschlungen, was sich am besten aus der Draufsicht gemäß Fig. 5 ergibt. Dabei wird davon ausgegangen, dass eine vollständige Umschlingung einen Umschlingungsbereich von 360° einnimmt und eine U-förmige Halbumschlingung einen Umschlingungsbereich von 180°. Vorteilhaft ist ein Umschlingungsbereich von wenigstens 220°.

Um den Abstand zwischen den Greifelementen 4 und der Teigstrangauflage, nämlich dem Förderband 10 möglichst gering zu halten, kann es vorteilhaft sein, wenn die gemeinsame Rotationsachse der Greifer 4 beim Schlingvorgang eine Taumelbewegung "T" ausführt, die in Fig. 2 in Phase P1 angedeutet ist.

Weiterhin ist es vorteilhaft, wenn die Formelemente 2 einzeln oder in Gruppen zumindest teilweise unter die Ebene der Teigstrangauflage zurückgezogen werden. Dies erleichtert den Überhebeprozess des Teigstrangs 8 in den Mittelbereich des Auges des Teigstrangs 8. Das Zurückziehen der bolzenartigen Formelemente 2 kann prozessgesteuert während der Überführung der Teigstrangenden 5 in den Mittelbereich der Formeinheit erfolgen.

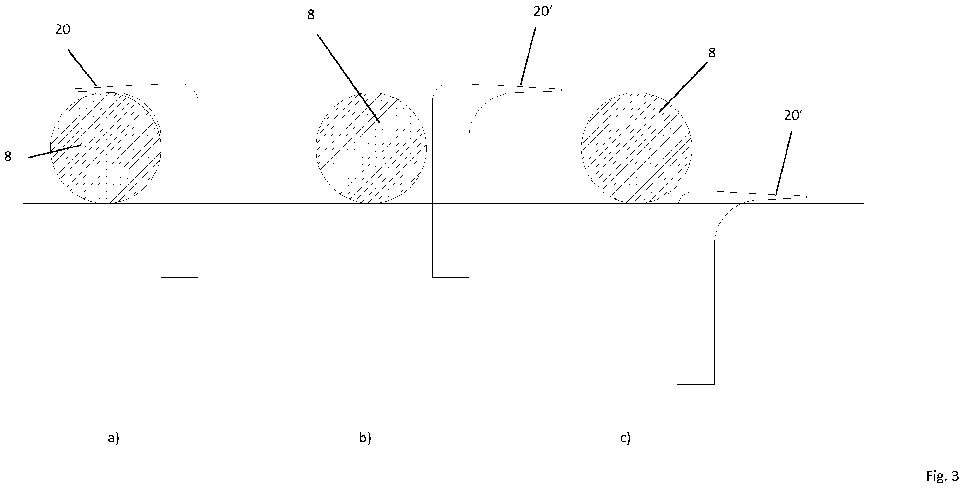

In Zeichnungsfiguren 3 und 4 sind unterschiedliche Möglichkeiten gezeigt, um ein Niederhalten des Teigstrangs 8 im Bereich der Formelemente 2 insbesondere bei hohen Taktzahlen zu gewährleisten. Gemäß Fig. 3 haben die Formelemente 2 an ihren oberen Enden hakenartige Vorsprünge 20, die, wenn sie bezogen auf den Kranz der Formelemente 2 nach außen stehend ausgerichtet sind, den herumgelegten Teigstrang 8 übergreifen, so wie dies in Figur 5 angedeutet ist.

Zur Freigabe des Teigstrangs 8 sind die bolzenartigen Formelemente 2 um ihre Hochachse rotierbar gelagert, sobald die hakenartigen Vorsprünge 20 nach innen gedreht sind und damit die Stellung 20' in Figur 5 erreicht haben, ist der herumgelegte Teigstrang 8 freigegeben. Darüber hinaus können die bolzenartigen Formelemente 2 dann in eine abgesenkte Stellung verfahren werden, ohne den Teigstrang 8 zu beschädigen, wie dies in Figur 3c dargestellt ist.

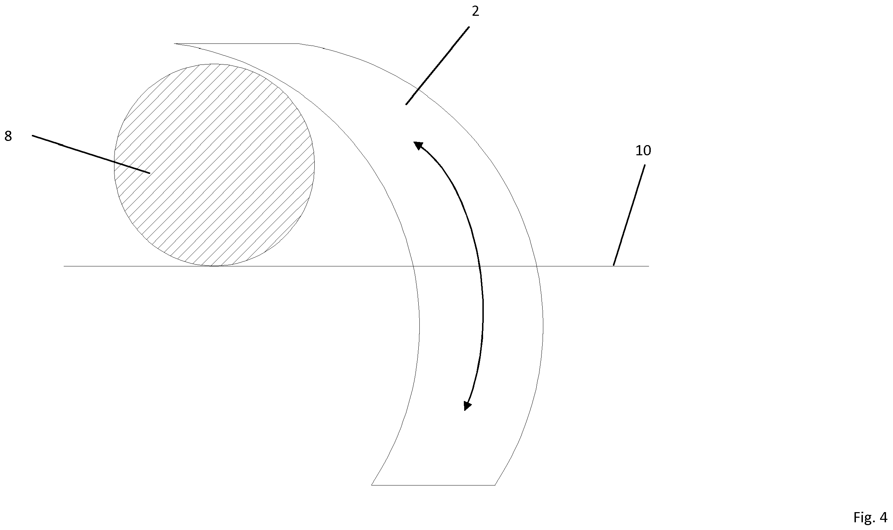

In Figur 4 ist eine andere Art eines Formschlusses und der Auflösung dieses Formschlusses dargestellt. Die bolzenartigen Formelemente 2 sind wie gekrümmte Zähne ausgebildet, die insgesamt auf einer gekrümmten Bahn nach unten gefahren werden können, um dadurch den Formschluss über dem unten gehaltenen Teigstrang 8 aufzulösen.

### BEZUGSZEICHENLISTE

- 1: Brezelform- und Schlingvorrichtung
- 2: Formelement
- 3: Greifeinheit
- 4: Greifer
- 5: Teigstrangende
- 6: Drehachse
- 7: Förderrichtung
- 8: Teigstrang
- 9: Zuführeinrichtung
- 10: Förderband
- 11: Niederhaltevorrichtung

- 20: Vorsprünge
- 20': Stellung

- P1: Teigstrangdehnungsphase
- P2: Teigstrangentlastungsphase
- P3: Absenkphase

- H: Abstehhöhe
- h1: Höhe
- h2: Anhebehöhe

- K: Überkreuzungspunkt
- U: Umkehrpunkt
- T: Taumelbewegung

## Patentansprüche

1. Verfahren zur maschinellen Brezelherstellung, mit folgenden Merkmalen
- Vorsehen einer Brezelform- und Schlingvorrichtung (1), der über eine Zuführeinrichtung Teigstrangabschnitte zugeführt werden;
- Erfassen des Mittelbereichs der Teigstrangabschnitte mit einer Formeinheit der Vorrichtung (1), wobei der Mittelbereich des Teigstrangs (8) um eine Mehrzahl von höhenverlagerbaren bolzenartigen Formelementen (2) der Formeinheit herumgelegt wird;
- Erfassen der Teigstrangenden (5) durch wenigstens eine mit Greifern (4) versehene Greifeinheit (3) und Dehnung des Teigstrangs (8) durch Ausübung eines Zuges auf die Teigstrangenden (5) bei gleichzeitiger Fixierung des Mittelbereiches des Teigstrangs (8) durch die Formeinheit sowie
- Formung eines Brezelknotens durch eine gegenseitige Rotation der Greifer (4), **dadurch gekennzeichnet, dass**
- die Formung des Brezelknotens durch die Rotation der Greifer (4) bereits während der Dehnung des Teigstrangs (8) eingeleitet wird, wobei bei der Einleitung der Formung des Brezelknotens die bereits unter Zug befindlichen Teigstrangenden (5) derart gekreuzt werden, dass der Überkreuzungspunkt (K) der Teigstrangenden (5) nicht oder in einem Bereich zwischen 0,5 und 10 mm höher liegt als die Abstehhöhe (H) der Formelemente (2) über einer Teigstrangauflage.

2. Verfahren nach Anspruch 1, **dadurch gekennzeichnet, dass** der Teigstrang (8) beim nachfolgenden weiteren Schlingvorgang zur Herstellung des Brezelknotens durch die Greifer (4) im Bereich der Abstehhöhe (H) der bolzenartigen Formelemente (2) durch Reibschluss und/oder teilweisen Formschluss zwischen der Oberfläche des Teigstrangs (8) und den Formelementen (2) gehalten wird.

3. Verfahren nach Anspruch 1 oder 2, **dadurch gekennzeichnet, dass** die Mehrzahl von bolzenartigen Formelementen (2) von dem Teigstrang (8) in einem Umschlingungsbereich von wenigstens 220° umschlungen wird.

4. Verfahren nach einem der vorhergehenden Ansprüche, **dadurch gekennzeichnet, dass** die Teigstrangenden (5) sowohl während einer Teigstrangdehnungsphase (P1) als auch während einer Teigstrangentlastungsphase (P2) gegenüber der Teigstrangauflage angehoben werden.

5. Verfahren nach Anspruch 4, **dadurch gekennzeichnet, dass** die Teigstrangenden (5) während der Teigstrangdehnungsphase (P1) nur so weit angehoben werden, dass ein Teigstrangkreuzungsbereich (K) unter der Abstehhöhe (H) der bolzenartigen Formelemente (2) über der Teigstrangauflage liegt.

6. Verfahren nach einem der vorhergehenden Ansprüche, **dadurch gekennzeichnet, dass** die gemeinsame Rotationsachse der Greifer (4) beim Schlingvorgang eine Taumelbewegung ausführt.

7. Verfahren nach einem der vorhergehenden Ansprüche, **dadurch gekennzeichnet, dass** die Formelemente (2) einzeln oder in Gruppen zumindest teilweise abgesenkt und/oder unter die Ebene der Teigstrangauflage zurückgezogen werden.

8. Verfahren nach einem der vorhergehenden Ansprüche, **gekennzeichnet durch** Erzeugung eines Formschlusses wenigstens eines den Teigstrang (8) zumindest abschnittsweise niederhaltenden Hinterschnitts zumindest beim Kreuzen und/oder beim Schlingvorgang durch eine gekrümmte Ausbildung wenigstens eines bolzenartigen Formelements (2), wobei
der wenigstens eine den Teigstrang (8) niederhaltende Hinterschnitt durch einen Vorsprung (20) am freien Ende eines bolzenartigen Formelements (2) erzeugt wird.

9. Verfahren nach Anspruch 8, **gekennzeichnet durch** wenigstens teilweise Rotation eines gekrümmten oder mit einem Vorsprung (20) versehenen Formelements (2) um seine Hochachse zur Freigabe des Teigstrangs (8) aus dem Hinterschnitt.

10. Verfahren nach einem der vorhergehenden Ansprüche, **dadurch gekennzeichnet, dass** gekrümmte bolzenartige Formelemente (2) auf einer gekrümmten Bahn zurückgezogen werden.

11. Verfahren nach einem der vorhergehenden Ansprüche, **dadurch gekennzeichnet, dass** die Greifer (4) sowohl während der Dehnungsphase (P1) des Teigstrangs (8) unter Vergrößerung des Abstands der Greifer (4) von der Formvorrichtung als auch bei der Verkleinerung des Abstands der Greifer (4) von der Formvorrichtung während einer Teigstrangentlastungsphase (P2) angehoben werden und nur während des letzten Abschnitts (P3) der Teigstrangentlastungsphase (P2) ein Absenken der Greifer (4) zur Vereinigung der Teigstrangenden (5) mit dem Mittelbereich des Teigstrangs (8) erfolgt.

12. Verfahren nach einem der vorhergehenden Ansprüche, **dadurch gekennzeichnet, dass** die mit Greifern (4) versehene Greifeinheit (3) in der Teigstrangdehnungsphase (P1) in wenigstens zwei unterschiedlichen Bewegungsfreiheitsgraden relativ zu den bolzenartigen Formelementen (2) bewegt werden, wobei ein erster Bewegungsfreiheitsgrad eine lineare Bewegung der Greifeinheit (3) entlang einer linearen Bewegungsachse relativ zu den bolzenartigen Formelementen (2) ist und wenigstens ein weiterer Bewegungsfreiheitsgrad eine rotatorische Bewegung der Greifeinheit (3) um eine Rotationsachse relativ zu den bolzenartigen Formelementen (2) ist.

13. Verfahren nach einem der vorhergehenden Ansprüche, **dadurch gekennzeichnet, dass** die bolzenartigen Formelemente (2) in wenigstens zwei Richtungen höhenverlagerbar sind, wobei die Höhenverlagerung der Formelemente (2) in Abhängigkeit der geometrischen Abmessungen, insbesondere des Durchmessers, insbesondere des Mittelbereichs, eines Teigstrangabschnitts variabel eingestellt wird, insbesondere derart, dass das freie Ende eines jeweiligen Formelements (2) wenigstens den Scheitelpunkt des, insbesondere querschnittlich betrachtet runden bzw. rundlichen, Teigstrangabschnitts (8) überragt.

14. Vorrichtung zur Durchführung des Verfahrens nach einem der Ansprüche 1 bis 13 mit
- einer Brezelform- und Schlingvorrichtung (1), der über eine Zuführeinrichtung (9) Teigstrangabschnitte (8) zugeführt werden, wobei die Brezelformvorrichtung eine Formeinheit zur Erfassung des Mittelbereichs des Teigstrangs (8) aufweist, die eine Mehrzahl von höhenverlagerbaren bolzenartigen Formelementen (2) umfasst;
- mit einer Greifeinheit (3) zum Erfassen der Teigstrangenden (5) mit einer Mehrzahl von Greifern (4), wobei der Abstand zwischen der Greifeinheit (3) und der Formeinheit zur Dehnung des durch die Greifer (4) erfassten Teigstranges (8) variierbar ist sowie
- einer Steuereinheit zur Steuerung einer Linearbewegung entweder der Greifeinrichtung (3) und/oder der Formeinheit zur Vergrößerung und/oder Verkleinerung des Abstands zwischen der Greifeinheit (3) und der Formeinheit sowie zur Ansteuerung einer die Schlingbewegung zur Formung des Brezelknotens ausführenden Rotation der Greifer (4), **dadurch gekennzeichnet, dass**
- durch die Steuerungsvorrichtung die Rotation der Greifer (4) bei gleichzeitiger den Teigstrang (8) dehnender Linearbewegung entweder der Formeinheit oder der Greifeinheit (3) ansteuerbar ist, wobei
- die Steuerungsvorrichtung eine Vertikalverstelleinrichtung der Greifeinheit (3) derart ansteuert, dass während einer Vergrößerung des Abstands zwischen Greifeinheit (3) und Formvorrichtung der Abstand der Greifer (4) von der Teigstrangauflage nicht oder in einem Bereich zwischen 0,5 und 10 mm höher ist als die Abstehlänge der bolzenartigen Formelemente (2) der Formeinheit von der Teigstrangauflage.

15. Vorrichtung nach Anspruch 14, **dadurch gekennzeichnet, dass** wenigstens eines der bolzenartigen Formelemente (2) zur teilweisen Umschließung eines um es herumgelegten Teigstrangabschnitts (8) wenigstens abschnittsweise gekrümmt ausgebildet ist.

16. Vorrichtung nach Anspruch 14 oder 15, **dadurch gekennzeichnet, dass** die gekrümmten bolzenartigen Vorsprünge (20) zur Freigabe eines um sie herumgelegten Teigstrangabschnitts zumindest teilweise verdrehbar ausgebildet und gelagert sind.

## Claims

1. A method for machine production of pretzels, comprising the following features:
- providing a pretzel shaping and looping device (1), which receives strands of dough by means of a feed mechanism,
- gripping the central area of the strands of dough with a shaping unit of the device, wherein the central area of the strand of dough (8) is wrapped around a plurality of bolt-type shaping elements (2) of the shaping unit that are adjustable in height;
- gripping the ends (5) of the strand of dough by means of at least one gripping unit (3) which is equipped with grippers (4) and stretching the strand of dough (8) by pulling on the ends (5) of the strand of dough, while at the same time securing the central area of the strand of dough (8) by the shaping unit, and
- shaping a pretzel knot by means of a mutual rotation of the grippers (4),
**characterized in that**
- the shaping of the pretzel knot is initiated by rotation of the grippers (4) already during the stretching of the strand of dough (8), wherein in initiation of the shaping of the pretzel knot, the ends (5) of the strand of dough that are already under tension are crossed in such a way that the point of intersection (K) of the ends (5) of the strand of dough is no higher than or is higher in a range between 0.5 and 10 mm than the projection height (H) of the shaping elements (2) above a dough supporting surface.

2. The method according to claim 1, **characterized in that** the strand of dough (8) is held by the grippers (4) in the area of the projection height (H) of the bolt-type shaping elements (2) by means of a friction-locking connection and/or partial form-fitting connection between the surface of the strand of dough (8) and the shaping elements (2) in the subsequent additional looping process to produce the pretzel knot.

3. The method according to claim 1 or 2, **characterized in that** the plurality of bolt-type shaping elements (2) is wrapped by the strand of dough (8) in a wrap range of at least 220°.

4. The method according to one of the preceding claims, **characterized in that** the ends (5) of the strand of dough are lifted with respect to the dough supporting surface both during a dough stretching phase (P1) as well as during a dough relaxation phase (P2).

5. The method according to claim 4, **characterized in that,** during the dough-stretching phase (P1), the ends (5) of the strand of dough are lifted only far enough that a dough intersection area (K) is situated beneath the projection height (H) of the bolt-type shaping elements (2) above the dough supporting surface.

6. The method according to one of the preceding claims, **characterized in that** the joint axis of rotation of the grippers (4) executes a tumbling movement in the wrapping process.

7. The method according to one of the preceding claims, **characterized in that** the shaping elements (2) are at least partially lowered individually or in groups and/or are retracted below the level of the dough supporting surface.

8. The method according to one of the preceding claims, **characterized by** creation of a form-fitting connection of at least one undercut which holds down the strand of dough (8) in at least some sections, and does so at least in crossing and/or in the looping process by means of a curved design of at least one bolt-type shaping element (2), wherein
the at least one undercut which holds down the strand of dough (8) is created by a protrusion (20) on the free end of a bolt-type shaping element (2).

9. The method according to claim 8, **characterized by** at least partial rotation of a curved shaping element (2) or the latter provided with a protrusion (20) about its vertical axis to release the strand of dough (8) from the undercut.

10. The method according to one of the preceding claims, **characterized in that** curved bolt-type shaping elements (2) are retracted on a curved path.

11. The method according to one of the preceding claims, **characterized in that** the grippers (4) are lifted both during the stretching phase (P1) of the strand of dough (8), increasing the distance of the grippers (4) from the shaping device as well as reducing the distance of the grippers (4) from the shaping device during a dough relaxation phase (P2) and the grippers (4) are lowered only during the last phase (P3) of the dough relaxation phase (P2) to combine the ends (5) of the strand of dough with the central area of the strand of dough (8).

12. The method according to one of the preceding claims, **characterized in that** the gripping unit (3) which is provided with grippers (4) is moved during the dough stretching phase (P1) in at least two different degrees of freedom of movement relative to the bolt-type shaping elements (2), wherein a first degree of freedom of movement is a linear movement of the gripping unit (3) along a linear axis of movement relative to the bolt-type shaping elements (2) and at least one additional degree of freedom of movement is a rotational movement of the gripping unit (3) about an axis of rotation relative to the bolt-type shaping elements (2).

13. The method according to one of the preceding claims, **characterized in that** the bolt-type shaping elements (2) are adjustable in height in at least two directions, wherein the adjustment in height of the shaping elements (2) is set to be variable as a function of the geometric dimensions, in particular the diameter, in particular that of the central area of a strand of dough, in particular such that the free end of a respective shaping element (2) extends above at least the crown point of the round or roundish strand of dough (8), in particular as seen in cross section.

14. A device for carrying out the method according to one of claims 1 to 13, comprising
- a pretzel shaping and looping device (1) which receives strands of dough (8) via a feed mechanism (9), wherein the pretzel-shaping device comprises a shaping unit for gripping the central area of the strand of dough (8), comprising a plurality of bolt-type shaping elements (2) that are adjustable in height;
- a gripping unit (3) for gripping the ends (5) of the strand of dough, having a plurality of grippers (4), wherein the distance between the gripping unit (3) and the shaping unit is variable for stretching the strand of dough (8) gripped by the grippers (4) as well as
- a control unit for controlling a linear movement of either the gripping device (3) and/or the shaping unit for increasing and/or reducing the distance between the gripping unit (3) and the shaping unit as well as for controlling a rotation of the grippers (4) carried out to execute the looping movement for shaping the pretzel knot, **characterized in that**
- by means of the control device the rotation of the grippers (4) can be controlled with at the same time a linear movement of either the shaping unit or the gripping unit (3) stretching the strand of dough (8), wherein
- the control device controls a vertical adjustment device of the gripper unit (3) so that the distance of the grippers (4) from the dough supporting surface is no higher than or is higher in a range between 0.5 and 10 mm than the projection length of the bolt-type shaping elements (2) of the shaping unit from the dough supporting surface while increasing the distance between the gripping unit (3) and the shaping device.

15. The device according to claim 14, **characterized in that** at least one of the bolt-type shaping elements (2) is designed to be curved for partial wrapping of a strand of dough (8) around it in at least some sections.

16. The device according to claim 14 or 15, **characterized in that** the curved bolt-type projections (20) are designed and supported so that they are at least partially rotatable to release a strand of dough wrapped around them.

## Revendications

1. Procédé de fabrication mécanisée de bretzels, présentant les propriétés suivantes
- la préparation d'un dispositif de formage et de bouclage de bretzel (1) auquel sont amenés des tronçons de boudin de pâte par l'intermédiaire d'un dispositif d'alimentation ;
- la saisie de la partie centrale des tronçons de boudin de pâte à l'aide d'une unité de formage du dispositif (1), la partie centrale du boudin de pâte (8) étant placée autour d'une pluralité d'éléments de formage (2) en forme de broche de l'unité de formage, qui sont déplaçables en hauteur,
- la saisie des extrémités de boudin de pâte (5) par au moins une unité de préhension (3) munie de préhenseurs (4), et l'allongement du boudin de pâte (8) en exerçant une traction sur les extrémités de boudin de pâte (5) et en fixant simultanément la partie centrale du boudin de pâte (8) à l'aide de l'unité de formage, ainsi que
- le formage d'un nœud de bretzel par rotation réciproque des préhenseurs (4),
**caractérisé en ce que**
- le formage du nœud de bretzel par la rotation des préhenseurs (4) est initiée déjà pendant l'allongement du boudin de pâte (8), et lors du démarrage du formage du nœud de bretzel, les extrémités de boudin de pâte (5) se trouvant déjà en traction, sont croisées de manière telle que le point de croisement (K) des extrémités de boudin de pâte (5) ne se situe pas plus haut ou dans une plage entre 0,5 et 10 mm plus haut que la hauteur de saillie (H) des éléments de formage (2) au-dessus d'une surface d'appui du boudin de pâte.

2. Procédé selon la revendication 1, **caractérisé en ce que** le boudin de pâte (8), lors de la poursuite de l'opération de bouclage pour la réalisation du nœud de bretzel par les préhenseurs (4), est maintenu, dans la zone de la hauteur de saillie (H) des éléments de formage (2), par une liaison par adhérence et/ou une liaison par complémentarité de formes partielle entre la surface du boudin de pâte (8) et les éléments de formage (2) .

3. Procédé selon la revendication 1 ou la revendication 2, **caractérisé en ce que** la pluralité d'éléments de formage (2) en forme de broche sont entourés par le boudin de pâte (8) sur une zone d'enroulement d'au moins 220°.

4. Procédé selon l'une des revendications précédentes, **caractérisé en ce que** les extrémités de boudin de pâte (5) sont soulevées par rapport à la surface d'appui de boudin de pâte, aussi bien pendant une phase d'allongement (P1) du boudin de pâte que pendant une phase de détente (P2) du boudin de pâte.

5. Procédé selon la revendication 4, **caractérisé en ce que** les extrémités de boudin de pâte (5), pendant la phase d'allongement (P1) du boudin de pâte, ne sont soulevées que de manière telle, qu'une zone de croisement du boudin de pâte (K) se situe sous la hauteur de saillie (H) des éléments de formage (2) en forme de broches au-dessus de la surface d'appui du boudin de pâte.

6. Procédé selon l'une des revendications précédentes, **caractérisé en ce que** l'axe de rotation commun des préhenseurs (4) effectue un mouvement d'oscillation lors de l'opération bouclage.

7. Procédé selon l'une des revendications précédentes, **caractérisé en ce que** les éléments de formage (2) sont abaissés partiellement et/ou retirés sous le plan de la surface d'appui de boudin de pâte, individuellement ou par groupes.

8. Procédé selon l'une des revendications précédentes, **caractérisé par** la réalisation d'une liaison par complémentarité de formes à l'aide d'au moins une contre-dépouille qui maintient le boudin de pâte (8), au moins par secteurs, vers le bas, tout au moins lors du croisement et/ou pendant l'opération de bouclage, grâce à une configuration courbée d'au moins un élément de formage (2) en forme de broche, ladite au moins une contre-dépouille, qui maintient le boudin de pâte (8) vers le bas, étant réalisée par une protubérance (20) à l'extrémité libre d'un élément de formage (2) en forme de broche.

9. Procédé selon la revendication 8, **caractérisé par** au moins une rotation partielle d'un élément de formage (2) courbé ou muni d'une protubérance (20), autour de son axe vertical, pour libérer le boudin de pâte (8) de la contre-dépouille.

10. Procédé selon l'une des revendications précédentes, **caractérisé en ce que** des éléments de formage (2) en forme de broche sont escamotés sur une trajectoire courbe.

11. Procédé selon l'une des revendications précédentes, **caractérisé en ce que** les préhenseurs (4) sont soulevés aussi bien pendant la phase d'allongement (P1) du boudin de pâte (8) tout en augmentant la distance des préhenseurs (4) au dispositif de formage, que lors de la diminution de la distance des préhenseurs (4) au dispositif de formage pendant une phase de détente (P2) du boudin de pâte, et un abaissement des préhenseurs (4) n'est effectué que pendant la dernière partie (P3) de la phase de détente (P2) du boudin de pâte, en vue de venir réunir les extrémités de boudin de pâte (5) à la partie centrale du boudin de pâte (8).

12. Procédé selon l'une des revendications précédentes, **caractérisé en ce que** l'unité de préhension (3) dotée de préhenseurs (4) peut, dans la phase d'allongement (P1) du boudin de pâte, être déplacée selon au moins deux degrés de liberté de mouvement différents, par rapport aux éléments de formage (2) en forme de broche, un premier degré de liberté de mouvement étant un mouvement linéaire de l'unité de préhension (3) le long d'un axe de déplacement linéaire par rapport aux éléments de formage (2) en forme de broche, et au moins une degré de liberté de mouvement supplémentaire étant un mouvement rotatif de l'unité de préhension (3) autour d'un axe de rotation, par rapport aux éléments de formage (2) en forme de broche.

13. Procédé selon l'une des revendications précédentes, **caractérisé en ce que** les éléments de formage (2) en forme de broche sont déplaçables en hauteur dans au moins deux directions, le déplacement en hauteur des éléments de formage (2) étant réglé de manière variable en fonction des dimensions géométriques, notamment du diamètre, en particulier de la partie centrale, d'un tronçon de boudin de pâte, notamment de façon telle, que l'extrémité libre d'un élément de formage (2) respectivement considéré dépasse au moins le point de crête du tronçon de boudin de pâte (8) rond ou arrondi, vu en section transversale.

14. Dispositif pour la mise en œuvre du procédé selon l'une des revendications 1 à 13, comprenant
- un dispositif de formage et de bouclage de bretzel (1) auquel sont amenés des tronçons de boudin de pâte (8) par l'intermédiaire d'un dispositif d'alimentation (9), le dispositif de formage de bretzel présentant une unité de formage destinée à saisir la partie centrale du boudin de pâte (8) et comportant une pluralité d'éléments de formage (2) en forme de broche, déplaçables en hauteur ;
- une unité de préhension (3) pour la saisie des extrémités de boudin de pâte (5) et comportant une pluralité de préhenseurs (4), la distance entre l'unité de préhension (3) et l'unité de formage étant susceptible d'être variable pour l'allongement du boudin de pâte (8) saisi par les préhenseurs (4),
- ainsi qu'une unité de commande pour assurer la commande d'un mouvement linéaire du dispositif de préhension (3) et/ou de l'unité de formage pour augmenter et/ou diminuer la distance entre l'unité de préhension (3) et l'unité de formage, ainsi que pour assurer la commande d'une rotation des préhenseurs (4) effectuant le mouvement de bouclage pour assurer le formage du nœud de bretzel, **caractérisé en ce que**
- le dispositif de commande permet de commander la rotation des préhenseurs (4) simultanément au mouvement linéaire, soit de l'unité de formage, soit de l'unité de préhension (3), allongeant le boudin de pâte (8),
- le dispositif de commande assure la commande d'un système de déplacement vertical de l'unité de préhension (3) de manière telle, que pendant une augmentation de la distance entre l'unité de préhension (3) et le dispositif de formage, la distance des préhenseurs (4) de la surface d'appui du boudin de pâte n'est pas plus haute, ou est plus haute dans une plage entre 0,5 et 10 mm, que la hauteur de saillie des éléments de formage (2) en forme de broche de l'unité de formage, au-dessus de la surface d'appui du boudin de pâte.

15. Dispositif selon la revendication 14, **caractérisé en ce qu'**au moins un des éléments de formage (2) sous forme de broche est réalisé au moins partiellement courbé, pour entourer au moins partiellement un tronçon de boudin de pâte (8) placé autour.

16. Dispositif selon la revendication 14 ou la revendication 15, **caractérisé en ce que** les protubérances (20) en forme de broche courbée sont réalisées et montées au moins partiellement rotatives, pour libérer un tronçon de boudin de pâte placé autour.
